# EUROPEAN PATENT APPLICATION

(11) **EP 2 236 373 A2**
(43) Date of publication of application: **06.10.2010**
(21) Application number: 10158689.9
(22) Date of filing: 31.03.2010
(51) Int. Cl.: B60T 13/58, B62L 3/00, B62M 6/40

(54) **Regenerative braking device and vehicle provided with regenerative braking device**

(30) Priority: 02.04.2009 JP 2009090403; 16.12.2009 JP 2009285388
(71) Applicant: Kabushiki Kaisha Toshiba, Tokyo 105-8001 (JP)
(72) Inventor: Hoshino, Masayuki, Tokyo 105-8001 (JP)
(74) Representative: Henkel, Feiler & Hänzel

(57) **Abstract**

A regenerative braking device includes a braking mechanism (42,44) configured to apply a braking force to a wheel, a brake operation section (40A,40B) configured to generate a brake operation amount, a brake operation amount transmission section (50) configured to transmit the brake operation amount from the brake operation section to the braking mechanism, a brake operation force sensor (68) configured to detect a brake operation force of the brake operation amount transmission section, a drive device (36) configured to apply a drive force to the wheel, and apply, at an operation time of the brake operation section, a regenerative braking force according to the brake operation force detected by the brake operation force sensor (68) to the wheel, and a reaction force generator (70) configured to apply a brake operation reaction force in accordance with a regeneration amount from the drive device (36) to the brake operation amount transmission section.

## Description

An embodiment of the present invention relates to a regenerative braking device used for an electric-powered vehicle provided with a motor, such as an electric power assisted bicycle, electric motorcycle, electric motorcar, and the like, and a vehicle provided with the device.

In general, an electric power assisted bicycle is provided with a motor configured to assist driving of a wheel, and the torque of the motor is controlled in accordance with the pedaling torque. At the braking time of the electric power assisted bicycle, regenerative electric power can be obtained from the motor. There is proposed an electric power assisted bicycle comprising a regenerative braking device configured to charge an electric storage device such as a battery by utilizing the regenerative electric power obtained at the braking.

As such a regenerative braking device, in, for example, Jpn. Pat. Appln. KOKAI Publication No. 2004-149001, there is proposed a device in which regenerative braking is operated by a regeneration switch that is brought into an on-state at an idle part (operation region in which no braking operation is generated by the braking mechanism even when the brake lever is operated) of an operation of an ordinary braking mechanism configured to carry out braking by means of friction. Jpn. Pat. Appln. KOKAI Publication No. 2003-204602 discloses a regenerative braking system in which the regeneration amount is controlled in accordance with the operation amount of the brake lever.

In the above-mentioned regenerative braking device, when the brake is operated by the regeneration switch, it is difficult to change the regeneration amount so that a braking amount desired by the operator can be obtained. Further, in the case of the device in which the regeneration amount is controlled by the operation amount of the brake lever, the range of the operation amount is limited to the idle range of the brake lever, and hence it is difficult to operate the brake lever so that a braking amount desired by the operator can be obtained. Furthermore, in the above regenerative braking device, the sense of operation of the brake and actual reduction in speed do not coincide with each other, which could cause distress for the operator.

The present invention has been contrived in consideration of the above points, and an object thereof is to provide a regenerative braking device for an electric-powered vehicle capable of appropriately and easily adjusting the regenerative braking amount in accordance with the brake operation amount, and a vehicle provided with the braking device.

According to an aspect of the invention, there is provided a regenerative braking device characterized by comprising: a braking mechanism configured to apply a braking force to a wheel; a brake operation section configured to generate a brake operation amount; a brake operation amount transmission section configured to transmit the brake operation amount from the brake operation section to the braking mechanism; a brake operation force sensor configured to detect a brake operation force of the brake operation amount transmission section; a drive device configured to apply a drive force to the wheel, and apply, at an operation time of the brake operation section, a regenerative braking force according to the brake operation force detected by the brake operation force sensor to the wheel; an electric power storage device configured to storage a regenerative electric power from the drive device; and a reaction force generator configured to apply a brake operation reaction force in accordance with a regeneration amount from the drive device to the brake operation amount transmission section.

According to another aspect of the invention, there is provided a vehicle characterized by comprising: a motor configured to drive a wheel; a braking mechanism configured to apply a braking force to the wheel; a brake operation section configured to generate a brake operation amount; a brake operation amount transmission section configured to transmit a brake operation amount from the brake operation section to the braking mechanism; a brake operation force sensor configured to detect a brake operation force of the brake operation amount transmission section; a drive device configured to apply, upon operating the brake operation section, a regenerative braking force according to the brake operation force detected by the brake operation force sensor to the wheel; an electric power storage device configured to receive a regenerative electric power from the drive device; and a reaction force generator configured to apply a brake operation reaction force corresponding to the regeneration amount from the drive device to the brake operation amount transmission section.

According to the above-mentioned configuration, it is possible to provide a regenerative braking device for a vehicle that is capable of appropriately and easily adjusting the regenerative braking amount in accordance with the brake operation amount, and a vehicle provided with the braking device.

The invention can be more fully understood from the following detailed description when taken in conjunction with the accompanying drawings, in which:
FIG. 1 is a side view showing an electric power assisted bicycle provided with a regenerative braking device according to a first embodiment of the present invention;
FIG. 2 is a plan view of the electric power assisted bicycle;
FIG. 3 is a perspective view showing a rear-wheel braking mechanism of the electric power assisted bicycle;
FIG. 4 is a cross-sectional view showing the rear-wheel braking mechanism;
FIG. 5 is a plan view showing a brake lever of the rear-wheel braking mechanism;
FIG. 6 is a block diagram showing a control system of the regenerative braking device;
FIG. 7 is a cross-sectional view showing the regenerative braking device;
FIG. 8 is a cross-sectional view showing a regenerative braking device according to a second embodiment of the present invention;
FIG. 9 is a cross-sectional view showing a regenerative braking device according to a third embodiment of the present invention;
FIG. 10 is a view schematically showing a flow of a magnetic flux in the regenerative braking device according to the third embodiment;
FIG. 11 is a view schematically showing a flow of a magnetic flux in the regenerative braking device according to the third embodiment;
FIG. 12 is a block diagram showing a control system of a regenerative braking device according to a fourth embodiment of the present invention;
FIG. 13 is a cross-sectional view showing a reaction force generator of the regenerative braking device according to the fourth embodiment;
FIG. 14 is a cross-sectional view of the reaction force generator taken along line XIV-XIV in FIG. 13;
FIG. 15 is a cross-sectional view of the reaction force generator taken along line XV-XV in FIG. 13;
FIG. 16 is a side view showing a state where the reaction force generator is incorporated in the rear brake of the bicycle;
FIG. 17 is a view showing the operation characteristics of the regenerative braking device and mechanical brake;
FIG. 18 is a view showing variations in inner-wire pull amount versus variations in core gap, brake wire reaction force, and mechanical braking amount (braking amount) in the case where the battery is in a fully charged state, and regenerative braking cannot function;
FIG. 19 is a cross-sectional view showing the reaction force generator at the reaction force generation time;
FIG. 20 is a cross-sectional view of the reaction force generator taken along line XX-XX in FIG. 19;
FIG. 21 is a cross-sectional view of the reaction force generator taken along line XXI-XXI in FIG. 19;
FIG. 22 is a cross-sectional view showing the operation state of the reaction force generator at the time at which the mechanical brake is operated to the maximum;
FIG. 23 is a cress-sectional view of the reaction force generator taken along line XXIII-XXIII in FIG. 22;
FIG. 24 is a cross-sectional view of the reaction force generator taken along line XXIV-XXIV in FIG. 22;
FIG. 25 is a side view showing a state where the reaction force generator is incorporated in the front brake of the bicycle;
FIG. 26 is a side view showing a state where the reaction force generator is incorporated in another rear brake of the bicycle; and
FIG. 27 is a cross-seotional view showing a regenerative braking device according to a fifth embodiment of the present invention.

Embodiments of the present invention will be described in detail while referring to the drawings.

### (First embodiment)

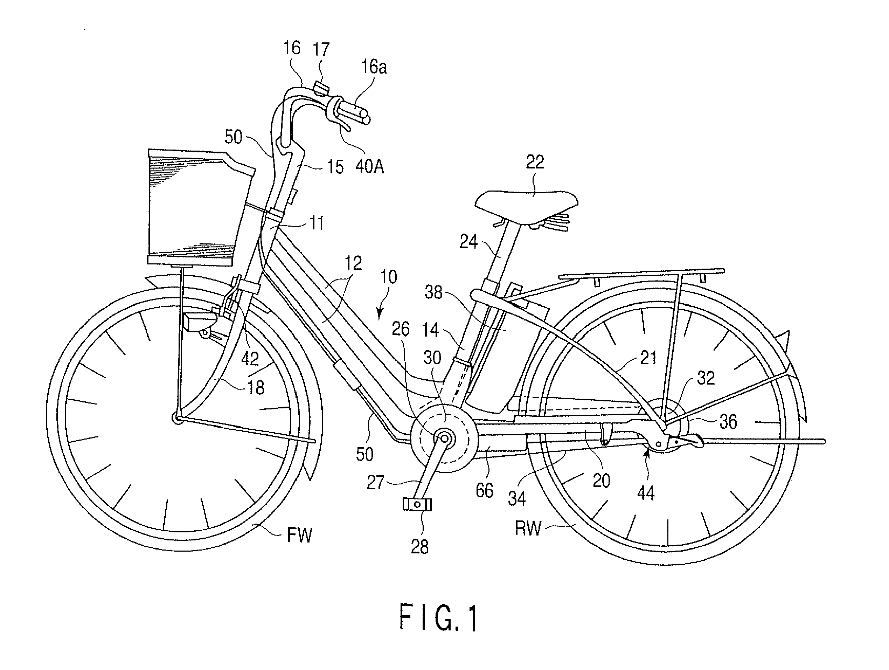

FIG. 1 shows an electric power assisted bicycle as a vehicle drive device and electric-powered vehicle provided with a regenerative braking device according to a first embodiment. The electric power assisted bicycle comprises a body frame 10, and the body frame comprises a head pipe 11 positioned in the front part of the body, down pipes 12 extending downwardly/rearwardly from the head pipe 11, and seat post 14 upwardly rising from the vicinity of an end part of each of the down pipes 12. A handle post 15 of a handle 16 is rotatably inserted into an upper part of the head pipe 11, and a front fork 18 coupled to the handle post 15 is supported at a lower part of the head pipe 11. A front wheel FW is rotatably and axially supported at lower ends of the front fork 18.

A pair of right and left chain stays 20 rearwardly extends from a lower end part of the seat post 14, and a rear wheel RW is axially supported between end parts of the chain stays 20. A pair of right and left seat stays 21 is provided between an upper part of the seat post 14 and the end parts of both the chain stays 20.

A seat pipe 24 provided with a seat 22 at an upper end thereof is slidably fitted into the seat post 14 so that the height of the seat 22 can be adjusted.

A crankshaft 26 is rotatably supported at the lower end part of the seat post 14, and a pedal 28 is axially supported at each of right and left ends of the crankshaft 26 through a crank 27. A first sprocket 30 is attached to the crankshaft 26, and is rotatably supported with the crankshaft 26. A second sprocket 32 rotated integrally with the rear wheel RW is attached to an axle of the rear wheel RW, and a chain 34 is extended between the second sprocket 32 and the first sprocket 30. By rotating the first sprocket 30 by means of the pedals 28 and cranks 27, it is possible to transmit the human power drive force to the second sprocket 32 and rear wheel RW through the chain 34.

The electric power assisted bicycle comprises, as an electrically-operated drive device, for example, a motor 36 configured to be incorporated into a hub of the rear wheel RW and drive the rear wheel, a battery 38 configured to supply power to the motor 36, and a control circuit to be described later, configured to control supply of the power to the motor 36. Further, a power switch 17 configured to turn on/off the power is provided on the handle 16. The battery 38 is attached to a rear part of the seat post 14. The battery 38 is contained in a storage case, and the storage case is detachably attached to the seat post 14 through a battery bracket. The battery 38 includes a plurality of battery cells, and is mounted on the bicycle along the seat post 14 with the longitudinal direction thereof substantially in the vertical direction. By means of such an electrically-operated drive device, the rear wheel RW is driven by using the motor 36 as a drive source.

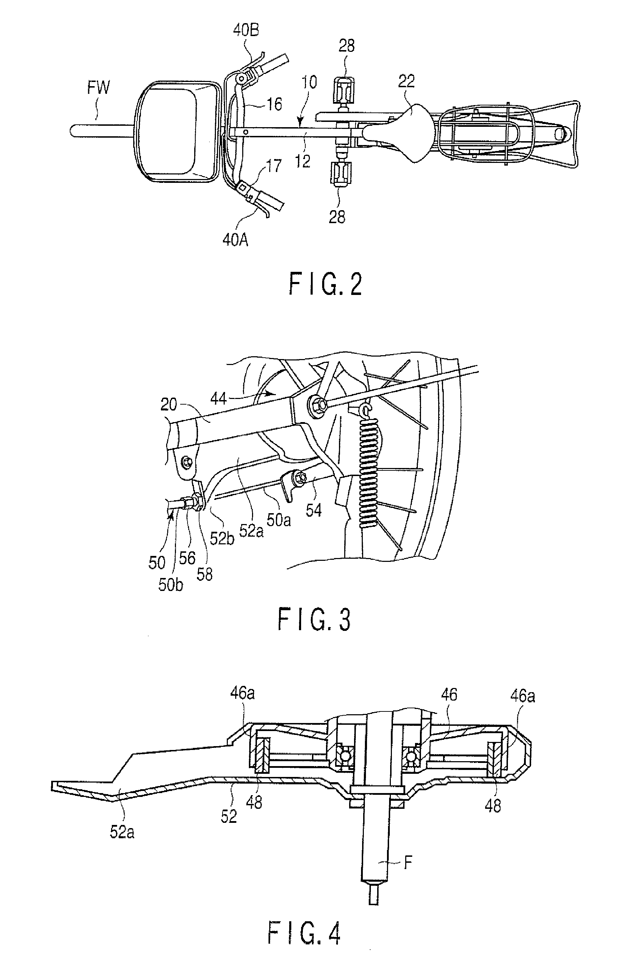

The electric power assisted bicycle comprises a braking mechanism configured to apply a braking force to the wheels, and a regenerative braking device, to be described later. As shown in FIGS. 1 and 2, a brake lever is provided at each of the right and left end parts of the handle 16 as a brake operation part configured to generate a brake operation amount. Like in an ordinary bicycle, a rear brake lever 40A is provided at the left end part of the handle 16 with respect to a person on the bicycle, and a front brake lever 40B is provided at the right end part of the handle 16.

A front wheel braking mechanism configured to brake the front wheel FW is attached to the front fork 18, and includes a side brake 42 configured to brake the front wheel by pressing brake shoes against a rim of the front wheel FW. The side brake 42 is connected to the front brake lever 40B through a brake wire. By an operation of tightly gripping the front brake lever 40B toward the grip side of the handle 16, the brake wire is pulled, and the side brake 42 is operated.

As a rear-wheel braking mechanism configured to brake the rear wheel RW, a drum-shaped brake 44 is provided at the center of the rear wheel RW. As shown in FIGS. 3 and 4, the drum-shaped brake 44 comprises a disk-shaped brake drum 46 which is provided rotatable together with the rear wheel around the axle F of the rear wheel RW, the axle F being fixed to the body frame 10. The brake drum 46 includes an annular portion 46a positioned coaxial with the axle F. A brake shoe 48 configured to be in sliding contact with an inner circumferential surface of the annular portion 46a, and brake the rotation of the brake drum 46, i.e., the rotation of the rear wheel RW is provided on the inner side of the brake drum 46. The brake shoe 48 is outwardly moved by an operation of the rear brake lever 40A provided on the handle 16, and is pressed against the annular portion 46a. A brake operation amount of the rear brake lever 40a is transmitted to the brake 44 through a rear brake wire 50 functioning as a brake operation amount transmission portion.

The outside of the brake 44 is covered with a brake retention portion 52. Further, the brake retention portion 52 includes a forwardly extending arm member 52a, and the arm member 52a is fixed to the chain stay 20 of the body frame 10. The rear brake wire 50 includes an inner wire 50a, and an outer tube 50b covering the periphery of the inner wire, and the inner wire 50a is movably inserted into the outer tube.

As shown in FIG. 3, a fixing part 52b is formed at a front end part of the arm member 52a, and a rear end of the outer tube 50b is fixed to the fixing part 52b. The inner wire 50a of the rear brake wire 50 further extends rearwardly from the fixing part 52b, and is fixed to a coupling member 54. The coupling member 54 is coupled to an extension bar (not shown) configured to operate the brake shoe 48. As is generally known, the fixing part 52b is provided with an adjusting screw configured to adjust the length of the rear brake wire 50, and locknut 58.

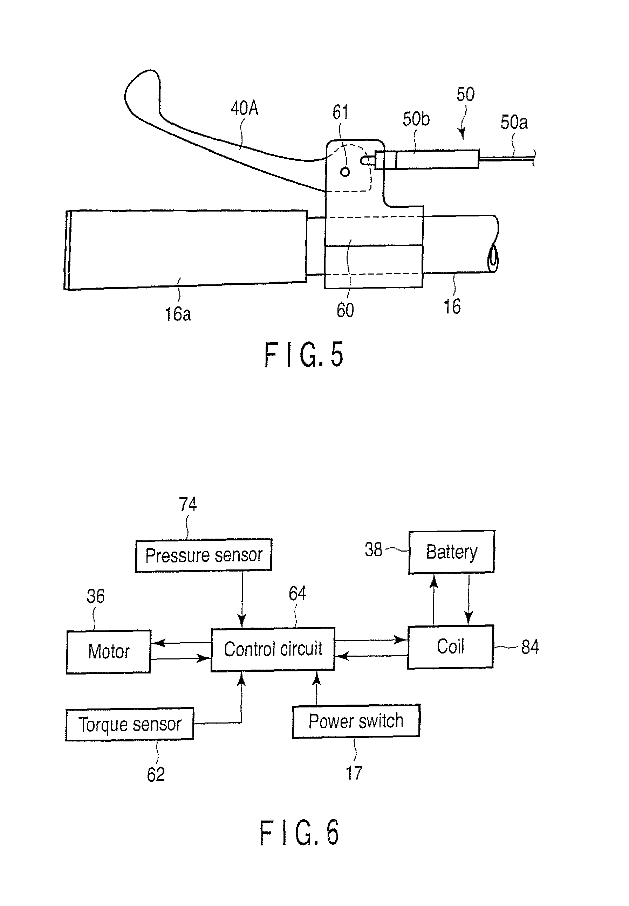

As shown in FIG. 5, the other end of the rear brake wire 50 is coupled to the rear brake lever 40A. As described previously, the rear brake lever 40A is rotatably supported by a lever bracket 60 in the vicinity of the grip 16a of the handle 16. The lever bracket 60 is provided with a pivot shaft 61, and the rear brake lever 40A is rotatable around the pivot shaft 61. An end portion of the outer tube 50b of the rear brake wire 50 is fixed to the lever bracket 60, and the inner wire 50a is coupled to the rear brake lever 40A.

By means of such a structure, when the inner wire 50a of the rear brake wire 50 is pulled by an operation of tightly gripping the rear brake lever 40A toward the grip 16a side, the coupling member 54 is displaced to move the extension bar, and the brake shoe 48 is operated, thereby braking the rear wheel RW.

In the electric power assisted bicycle configured as described above, when the pedals 28 are worked, the cranks 27 rotate the first sprocket 30, and the first sprocket 30 rotates the rear wheel RW through the chain 34 and second sprocket 32.

When the pedals 28 are worked to drive the rear wheel RW, torque resulting from the human power is detected, power is supplied from the battery 38 to the motor 36, and the motor drives the rear wheel RW in an assisting manner. In the electric power assisted bicycle, the power to be supplied to the motor 36 is controlled in such a manner that the rotating torque of the motor 36 driving the rear wheel RW and the rotating torque of the pedals 28 driving the rear wheel RW become equal to each other in the region of the speed lower than a predetermined speed. When the bicycle reaches the predetermined speed, the motor 36 stops driving the rear wheel RW. At this time, the configuration may be made in such a manner that the ratio of the rotating torque of the motor 36 driving the rear wheel RW to the rotating torque of the pedals 28 driving the rear wheel RW is varied in accordance with the speed of the bicycle, i.e., the rotational speed of the rear wheel RW.

FIG. 6 is a block diagram showing a control system of the electrically-operated drive device. The electrically-operated drive device is provided with a torque sensor 62 configured to detect the torque of the working force at the pedals 28 driving the rear wheel RW, and a control circuit 64 which is connected to both the battery 38 and the motor 36, is located between the battery and the motor, and is configured to control the power to be supplied from the battery 38 to the motor 36. Further, at the regenerative braking time, the control circuit 64 supplies the regenerative electric power generated in the motor 36 to the battery 38 to store the power therein.

Next, the regenerative braking device provided in the electric power assisted bicycle will be described below in detail.

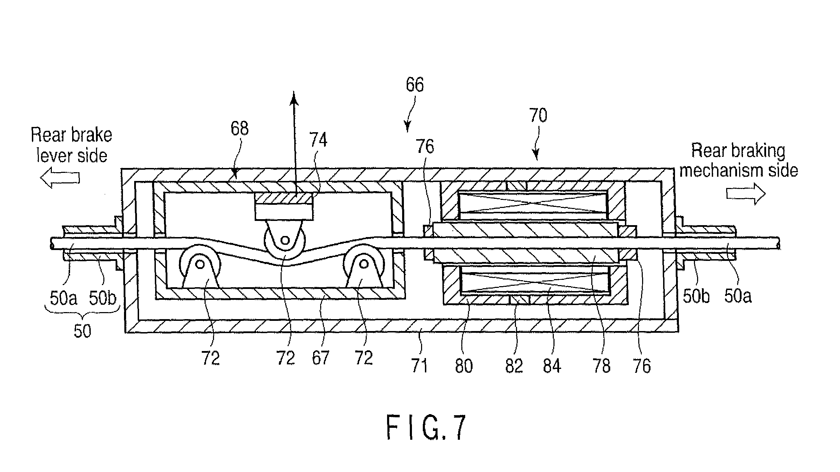

As shown in FIGS. 1 and 7, a regenerative braking device 66 is provided, for example, near the crank 27, at a lower portion of the body frame 10, and between the rear brake lever 40A and the rear braking mechanism (in this case, brake 44). The regenerative braking device 66 comprises a brake operation force sensor 68, a reaction force generator 70, and a case 71 containing these members, and the rear brake wire 50 extends to pass through the regenerative braking device 66.

The brake operation force sensor 68 is arranged on the rear brake lever 40A side of the reaction force generator 70, and detects the tension generated in the inner wire 50a of the rear brake wire 50. The brake operation force sensor 68 includes a plurality of, for example, three pulleys 72 provided in a line in a housing 67, and pressure sensor 74 configured to detect the pressure acting on the middle pulley. Further, the outer tube 50b of the rear brake wire 50 is fixed to the case 71, and inner wire 50a extends to pass through the case 71 and housing 67, and to be engaged with the three pulleys 72.

When the rear brake lever 40A is operated, and inner wire 50a is pulled, the brake operation force sensor 68 converts the tension generated in the inner wire 50a into the pressure applied to the pressure sensor 74 by means of the pulleys 72. The brake operation force sensor 68 detects the pressure by the pressure sensor 74 to detect the tension of the brake wire. A detection signal of the pressure sensor 74 is output to the control circuit 64.

The reaction force generator 70 is provided with a cylindrical core magnetic body 78 fixed to the inner wire 50a by a core fastening body 76, a cylindrical outer magnetic body 80 configured to form a magnetic path by surrounding the core magnetic body 78, and an annular magnet 82 incorporated in the outer magnetic body 80. The core magnetic body 78 is supported to be movable within the outer magnetic body 80 as one body integral with the inner wire 50a. The magnet 82 applies a magnetomotive force along the magnetic path constituted of the core magnetic body 78 and the outer magnetic body 80. A coil 84 is provided inside the outer magnetic body 80 and is positioned around the core magnetic body 78. The coil 84 is connected to the above-mentioned control circuit 64, and a DC current regenerated from the motor 36 to the battery 38 is made to flow through the coil 84. The core magnetic body 78, the outer magnetic body 80, and the coil 84 constitute a reaction force application section configured to generate a brake operation reaction force by using the regenerative current from the motor 36 and apply the generated reaction force to the brake wire 50.

In the regenerative braking device 66 configured as described above, when the rear brake lever 40A is operated, the inner wire 50a of the brake wire 50 is pulled toward the rear brake lever 40A side (left side in FIG. 7) by the rear brake lever 40A. The core magnetic body 78 is pulled leftwardly by the inner wire 50a, and the area of the core magnetic body 78 opposed to the outer magnetic body 80 is reduced. At this time, a magnetic flux is generated in the core magnetic body 78 and the outer magnetic body 80 by the magnet 82, and hence a force configured to return the core magnetic body 78 to the original position, i.e., to the braking mechanism side (right side in FIG. 7) is generated by the flux, thereby pulling the inner wire 50a in the direction opposite to the brake operation direction. As a result of this, tension is generated in the inner wire 50a. It should be noted that in this embodiment, although the magnet is used in the reaction force generator 70, the inner wire 50a is pulled in the direction opposite to the brake operation direction by using a spring configured to return the brake 44 to the non-braked state. Accordingly, even when the magnet is not used, tension is generated in the inner wire 50a by the operation of the rear brake lever 40A. Thus, a regenerative braking device 66 using no magnet 82 is also possible.

The tension is converted into pressure applied to the pressure sensor 74 by the pulleys 72 of the brake operation force sensor 68, and is detected by the pressure sensor 74. A detection signal of the pressure sensor 74 is sent to the control circuit 64. When generation of tension is detected by the brake operation force sensor 68, the control circuit 64 actuates the motor 36 as a generator to start regeneration. At this time, the control circuit 64 controls the regeneration amount from the motor 36 in accordance with the tension of the brake wire 50 detected by the brake operation force sensor 68. That is, the larger the tension of the inner wire 50a, the more the regeneration amount is increased. A regenerative braking amount of the rear wheel RW obtained by the motor 36 varies in accordance with the regeneration amount, and hence it is possible to control the regenerative braking amount in accordance with the tension of the inner wire 50a.

The regenerative current generated from the motor by the regeneration and stored in the battery 38 flows through the coil 84 in the reaction force generator 70. A magnetomotive force is generated in the core magnetic body 78 and outer magnetic body 80 by the current flowing through the coil 84, and the force configured to pull the core magnetic body 78 back toward the rear-wheel braking mechanism is increased by the increased magnetic flux. As a result of this, the tension of the inner wire 50a is increased, and the reaction force acting on the rear brake lever 40A is increased. When it is felt that excessive regenerative braking is generated from the reaction force or the like from the rear brake lever 40A, if the operator slackens the force gripping the rear brake lever 40A, the tension of the brake wire 50 becomes smaller, and the regenerative braking force can also be made smaller. As a result of this, it is possible to appropriately control the regenerative braking amount. The tension of the inner wire 50a is transmitted to the rear brake lever 40A as a reaction force. Accordingly, it is possible for the operator of the rear brake lever 40A to grasp the magnitude of the regenerative braking force by the reaction force felt by gripping the rear brake lever 40A.

In the regenerative braking device 66 configured as described above, the regenerative braking force is controlled by the tension acting on the inner wire 50a, and hence the operation amount (amount by which the brake wire is moved) of the rear brake lever 40A may be small. Accordingly, it is possible to sufficiently control the regenerative braking amount within the idle range of the operation of the braking mechanism. At this time, the operator of the rear brake lever 40A can grasp the regenerative braking amount as the brake operation reaction force from the rear brake lever 40A, and hence it is possible for the operator to manage the regenerative braking amount at will by changing the gripping force of the brake lever. At this time, when the regenerative braking amount is sufficient, braking is not carried out by the brake 44, and hence the braking energy is effectively stored in the battery.

It should be noted that the braking amount produced by the brake 44 is also controlled by pressing the brake shoe 48 against the brake drum 46 in accordance with the tension of the brake wire 50, and hence the regenerative brake of this embodiment causes less discomfort than an ordinary braking mechanism with no regenerative brake.

When the rear brake lever 40A is released, the core magnetic body 78 is returned to the original position, and hence the force acting between the core magnetic body 78 and the outer magnetic body 80 vanishes. At this time, even when any regenerative current flows through the coil 84, no force is generated between the core magnetic body 78 and the outer magnetic body 80. Accordingly, the tension of the inner wire 50a vanishes, and there is also no detection signal of the pressure sensor 74. As a result of this, the control circuit 64 terminates the regeneration from the motor 36, and storage in the battery 38. The above applies to the case where a drive current from the battery 38 to the motor 36 flows through the coil 84, and hence there occurs no phenomenon in which at the drive time of the motor 36, tension is caused in the brake wire 50, or regenerative braking is unnecessarily caused.

It should be noted that in order to prevent regenerative braking from occurring by only a little amount of operation of the rear brake lever 40A, it is sufficient if the length of the core magnetic body 78 is made longer than the outer magnetic body 80. In such a configuration, until the end portion of the core magnetic body 78 moves from the end portion of the outer magnetic body 80 to the inside thereof, no force is generated between the core magnetic body 78 and the outer magnetic body 80, and an idle section can be formed in the operation of the regenerative braking device 66.

When the rotational speed of the motor 36 becomes low, i.e., when the regenerative braking amount becomes small, the regenerative current flowing through the coil 84 becomes small, and the force acting to return the core magnetic body 78 toward the original position also becomes small. Accordingly, when the force configured to grip the rear brake lever 40A in order to carry out braking is continuously applied, the inner wire 50a is pulled out toward the brake lever side, and the brake shoe 48 of the brake 44 is pressed against the brake drum 46. When the brake shoe 48 is pressed against the brake drum 46, tension is generated in the brake wire 50, and hence the force configured to grip the rear brake lever 40A is continued. As described above, according to the regenerative braking device 66, it is possible to carry out transition from the regenerative braking to the braking by the ordinary braking mechanism (brake 44) without discomfort. This also applies to the case where the battery 38 is fully charged, and the regeneration is terminated. Further, even when it is assumed that the regenerative braking malfunctions or breaks down, it is possible to carry out braking of the wheels by using the ordinary braking mechanism, and maintain a high degree of safety.

It should be noted that the transition from the regenerative braking to the mechanical braking by the braking mechanism can be curried out with less discomfort if the mechanical braking by the braking mechanism is applied to the wheel to which the regenerative braking has been applied, as in this embodiment. Thus, it is recommendable, when the rear wheel RW is driven by the motor 36, to provide the regenerative braking device 66 according to this embodiment between the braking mechanism of the rear wheel RW and the rear brake lever and, when the front wheel FW is driven by the motor 36, to provide the regenerative braking device 66 between the braking mechanism of the front wheel FW and the front brake lever.

Further, upon sudden braking, the brake lever is gripped to such an extent that the braking mechanism becomes effective. At this time, tension is generated in the brake wire, and hence the regenerative braking is carried out by detecting the tension. As a result of this, it is also possible to simultaneously operate the braking mechanism and the regenerative braking.

From the above description, it is possible to obtain a regenerative braking system of an electric-powered vehicle capable of appropriately and easily adjusting the regenerative braking amount in accordance with the brake operation amount.

In this embodiment, upon operating the brake lever, a magnetic flux is generated between the core magnetic body 78 and the outer magnetic body 80 by the magnet 82 to cause the tension to act on the brake wire, and the regeneration is started by detecting the tension. However, the configuration is not limited to this, and the regeneration may be started by a regeneration switch which is turned on by the movement of the brake wire.

### (Second embodiment)

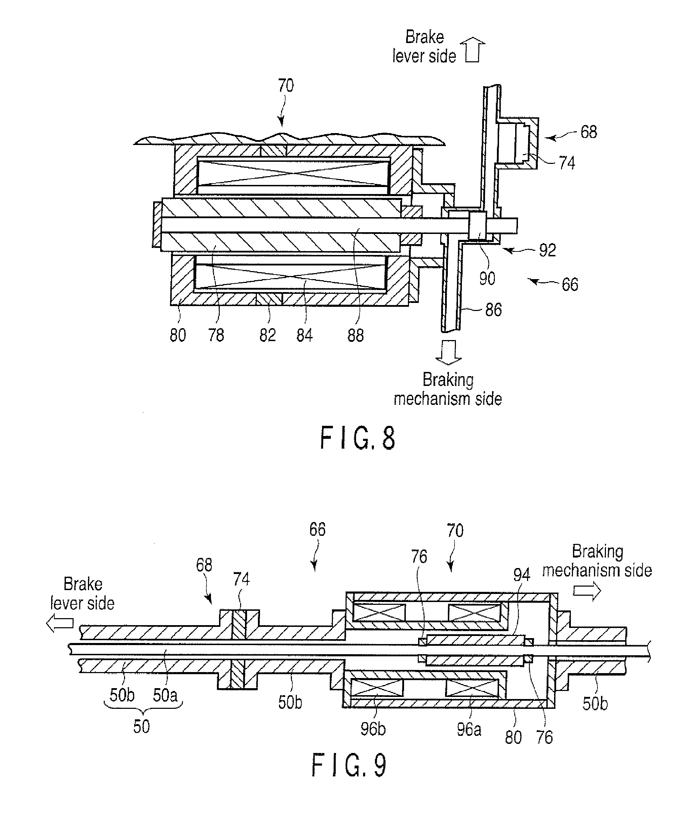

Next, a regenerative braking device according to a second embodiment of the present invention will be described. FIG. 8 is a cross-sectional view showing the regenerative braking device according to the second embodiment. It should be noted that in the second embodiment, the same parts as those in the first embodiment are denoted by the same reference symbols as those in the first embodiment, and a detailed description of them is omitted.

According to this embodiment, a regenerative braking device 66 is applied to an electric-powered vehicle in which an operation amount of the brake lever is transmitted to a braking mechanism by means of hydraulic pressure. The regenerative braking device 66 comprises a brake operation force sensor 68, and a reaction force generator 70. The brake operation force sensor 68 includes a pressure sensor 74 arranged directly inside the brake piping 86, and the pressure sensor 74 detects the pressure of a working fluid in the brake piping 86.

The reaction force generator 70 comprises a cylindrical core magnetic body 78, cylindrical outer magnetic body 80 configured to form a magnetic path by surrounding the core magnetic body, and an annular magnet 82 incorporated in the outer magnetic body 80. The core magnetic body 78 is supported to be movable within the outer magnetic body 80. The magnet 82 applies a magnetomotive force along the magnetic path constituted of the core magnetic body 78 and outer magnetic body 80. A coil 84 is provided inside the outer magnetic body 80, and is positioned around the core magnetic body 78. The coil 84 is connected to a control circuit, and a DC current regenerated from a motor to a battery is made to flow through the coil 84.

A guide rod 88 is inserted in the central portion of the core magnetic body 78, and is movable integrally with the core magnetic body. One end portion of the guide rod 88 protrudes from the core magnetic body 78, and extends to penetrate a part of the brake piping 86. A piston 90 is fixed to the end part of the guide rod 88 and arranged to be slidable in the brake piping 86. The piston 90 moves inside the brake piping 86 in accordance with the pressure, and the guide rod 88 and the core magnetic body 78 are moved as one body integral with the piston. The piston 90 and guide rod 88 constitute a pressure transmission mechanism configured to transmit the hydraulic pressure inside the brake piping 86, i.e., the operation amount of the brake lever to the core magnetic body 78.

According to the regenerative braking device 66 configured as described above, the operation amount of the working fluid inside the brake piping, and brake operation force are transmitted to the core magnetic body, and hence it is possible to obtain the same function/advantage as the first embodiment described previously.

It should be noted that although the regenerative braking system according to the first embodiment is considered to be mainly applied to a bicycle, and the regenerative braking system according to the second embodiment is considered to be mainly applied to a motorcycle, both the embodiments may be applied to both a bicycle and a motorcycle, and may be further applied to another electric-powered vehicle. Further, in the first and second embodiments, although the brake operation has been described by using a brake lever, the configuration in which a brake pedal is used may also be employed.

### (Third embodiment)

Then, a regenerative braking device according to a third embodiment of the present invention will be described. FIG. 9 is a cross-sectional view showing a regenerative braking device according to the third embodiment. It should be noted that in the third embodiment, the same parts as the first embodiment are denoted by the same reference symbols as the first embodiment, and a detailed description of them are omitted.

As shown in FIG. 9, the regenerative braking device 66 comprises a brake operation force sensor 68, and a reaction force generator 70, and is provided between a brake lever and a braking mechanism. In this embodiment, the case where an operation of the brake lever is transmitted to the braking mechanism by a brake wire 50 will be described.

The brake operation force sensor 68 is arranged on the brake lever side of the reaction force generator 70, and detects tension generated in the brake wire 50. The brake operation force sensor 68 is provided with, for example, an annular pressure sensor 74 embedded in a midway part of an outer tube 50b of the brake wire 50. The brake operation force sensor 68 detects the pressure generated in the outer tube 50b as the reaction force of the tension generated in an inner wire 50a of the brake wire 50 by means of the pressure sensor 74 to thereby detect the tension of the inner wire 50a. A control circuit controls the regeneration amount of the motor in accordance with the tension of the inner wire 50a detected by the brake operation force sensor 68.

The reaction force generator 70 is connected to the midway part of the brake wire 50. That is, the reaction force generator 70 comprises a cylindrical core magnet 94 fixed to the inner wire 50a by a core fastening body 76, a first coil 96a and a second coil 96b arranged outside the core magnet 94 in a line in the extension direction of the brake wire 50, and a cylindrical outer magnetic body 80 arranged on the outer circumferential side of the first and second coils. The outer magnetic body 80 constitutes a return magnetic path of the magnetic flux generated by the core magnet 94, and the first and second coils 96a and 96b, and reduces leakage of the magnetic flux to the outside. It should be noted that the first and second coils 96a and 96b correspond to the coil 84 of the first embodiment or second embodiment.

The core magnet 94, and the first and second coils 96a and 96b constitute a reaction force application section configured to apply the electromagnetic force generated at the magnet by both the regenerative current supplied from the motor to the coils, and magnet to the inner wire 50a as the brake operation reaction force.

The inner wire 50a extends to penetrate the reaction force generator 70, and the core magnet 94 is configured to be movable inside the first and second coils 96a and 96b in the axial direction of the coils 96a and 96b as one body integral with the inner wire 50a. The outer tube 50b of the brake wire 50 is fixed to the outer surface of the reaction force generator 70.

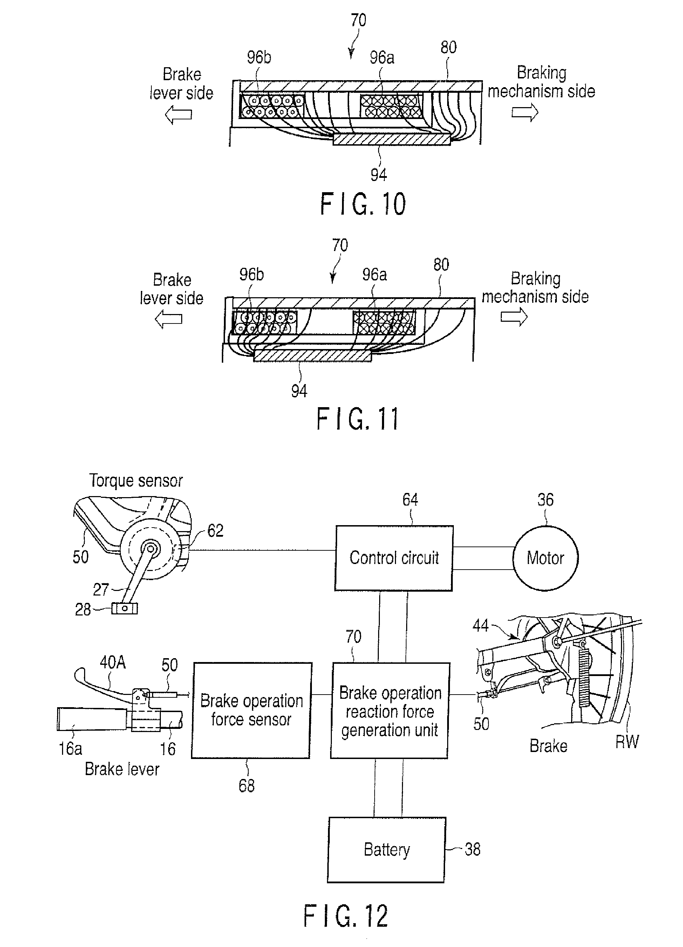

A DC current regenerated from the motor to the battery flows through the first coil 96a and second coil 96b. As shown in FIG. 10, the first coil 96a and second coil 96b are wound in opposite directions. The unit 70 is configured in such a manner that the electromagnetic forces generated by the magnetic flux generated from each of the different magnetic poles at both ends of the core magnet 94 and the current flowing through the first coil 96a and second coil 96b are on the same brake lever side. As a result of this, when a current flows through the first coil 96a and second coil 96b, the electromagnetic force directed toward the braking mechanism side is generated at the core magnet 94 as the reaction force of the electromagnetic force generated at the first coil 96a or second coil 96b.

In this embodiment, when the configuration in which a current for driving the motor flows from the battery through the first and second coils 96a and 96b is employed, the direction of the current is opposite to the current at the regeneration time. Thus, when a magnetic flux in the same direction as the regeneration time passes through each of the first and second coils 96a and 96b, the core magnet 94 generates the electromagnetic force toward the brake lever side, whereby the braking mechanism is operated irrespectively of the intention of the person riding the bicycle, this being an inconvenient state for the person.

Thus, the arrangement is made in such a manner that in a state where the brake lever is not operated, the core magnet 94 is moved sufficiently close to the braking mechanism side, an end of the core magnet 94 that generates a magnetic flux passing through the second coil 96b at the regeneration time is opposed to the first coil 96a, and the magnetic flux from this end passes through the first coil 96a. By the configuration described above, when the motor is driven, both the direction of the current flowing through the first coil 96a, and direction of the flux passing through the first coil 96a become opposite to those at the regeneration time, and hence the electromagnetic force generated at the first coil 96a is in the direction of the brake lever side, which is the same direction as at the time of regeneration. As a result of this, the electromagnetic force generated at the core magnet 94 is on the braking mechanism side, and the braking mechanism is not unnecessarily operated.

It should be noted that a configuration in which the current applied from the battery to drive the motor may be made not to flow through the first and second coils 96a and 96b by using a changeover switch.

In the regenerative braking device 66 configured as described above, when the brake lever is operated, the brake wire 50 is pulled, and the core magnet 94 fixed to the inner wire 50a is moved toward the brake lever side (left side in FIGS. 9 to 11). When the core magnet 94 is moved toward the brake lever side, the magnetic flux passing through each of the first coil 96a and second coil 96b in the state where the core magnet 94 is positioned as shown in FIG. 11 becomes larger than the magnetic flux passing through each of the first coil 96a and second coil 96b in the state where the core magnet 94 is positioned as shown in FIG. 10. As can be seen from the above, the tension acting on the inner wire 50a and the brake lever is increased in accordance with an increase in the operation amount of the brake lever. The regenerative braking amount is also increased with the increase in the tension.

An increase in the regenerative braking amount causes an increase in the regenerative DC current amount, whereby the current flowing through the first coil 96a and second coil 96b becomes larger. This increases the electromagnetic force acting on the core magnet 94, and the increased electromagnetic force is transmitted to the brake lever as an increase in the reaction force.

When the operation amount of the brake lever is made small, the core magnet 94 is moved from the position shown in FIG. 11 to the position shown in FIG. 10 (in the direction toward the braking mechanism), leading to a decrease in the electromagnetic force generated at the core magnet 94, decrease in the brake wire tension, and decrease in the regenerative braking amount.

In the third embodiment configured as described above too, the same function/advantage as in the first embodiment described previously can be obtained. That is, according to the regenerative braking device 66 associated with the third embodiment, it is possible to manage the regenerative braking amount by the operation of the brake lever, and transmit the regenerative braking amount to the brake lever as a reaction force of the brake lever. Accordingly, it is possible for the operator of the brake lever to grasp the magnitude of the regenerative braking force by the reaction force felt by gripping the rear brake lever.

### (Fourth embodiment)

Next, a regenerative braking device according to a fourth embodiment of the present invention will be described. FIG. 12 is a block diagram showing a control system of an electrically-operated drive system including a regenerative braking device according to the fourth embodiment. It should be noted that in the fourth embodiment, the same parts as those in the first embodiment are denoted by the same reference symbols as those in the first embodiment, and a detailed description of them will be omitted.

The electrically-operated drive system of an electric power assisted bicycle comprises, for example, a motor 36 incorporated in a hub of a rear wheel RW, and configured to drive the rear wheel, a battery 38 configured to supply power to the motor 36, and a control circuit 64 to be described later, configured to control the supply of power to the motor. At the regenerative braking time, the control circuit 64 supplies the regenerative electric power generated by the motor 36 to the battery 38 to store the power therein. The electrically-operated drive system is further provided with a torque sensor 62 configured to detect the torque of the working force at the pedals 28 driving the rear wheel RW, and the torque sensor 62 inputs a detection signal to the control circuit 64.

The regenerative braking device 66 comprises a brake operation force sensor 68, and a reaction force generator 70. The reaction force generator 70 is provided between the brake operation force sensor 68 and the rear brake 44, and a rear brake wire 50 extends to pass through the regenerative braking device 66. The brake operation force sensor 68 is configured in the same manner as, for example, the first embodiment. In the fourth embodiment, the configuration of the reaction force generator 70 is different from those in the embodiments described previously.

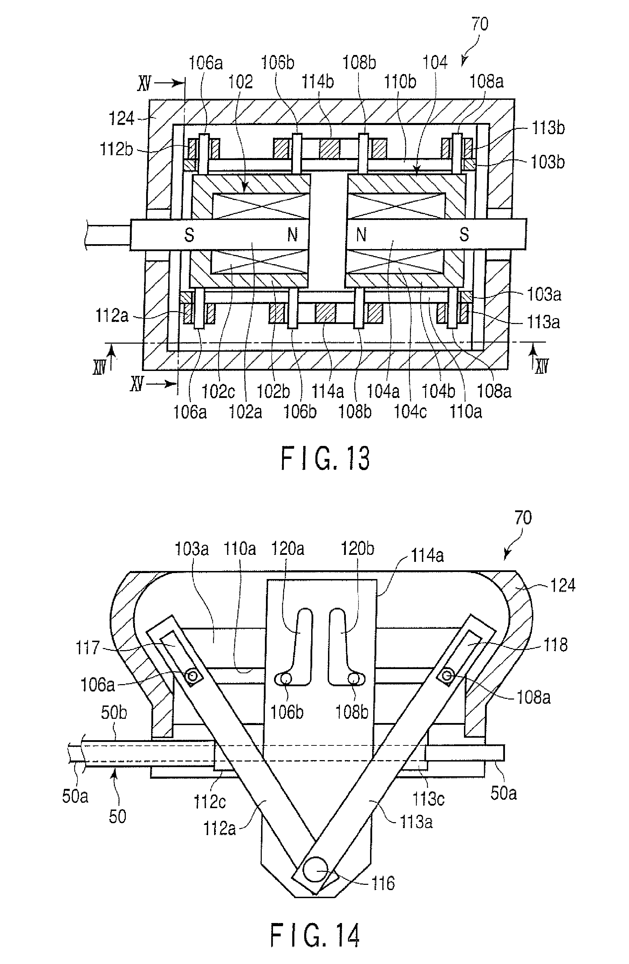

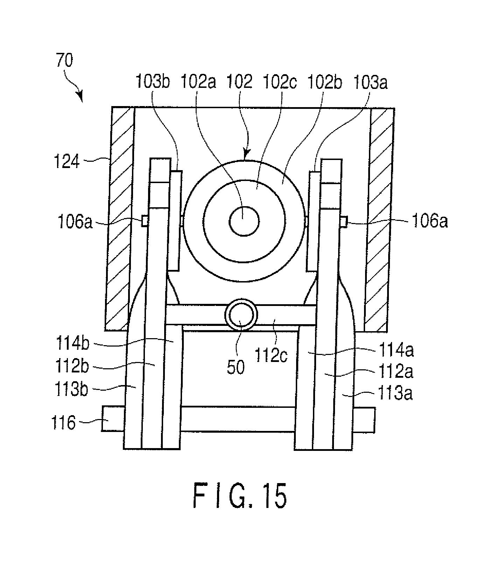

As shown in FIGS. 13, 14, and 15, in the reaction force generator 70 according to this embodiment, a brake operation reaction force corresponding to the regeneration amount from the electrically-operated drive system, and brake operation amount is generated by the repulsive force of a pair of electromagnets, and is applied to, for example, the brake wire 50. The reaction force generator 70 is provided with a pair of electromagnets 102 and 104, and a pair of mounting plates 103a and 103b configured to movably support these electromagnets. The electromagnet 102 includes a cylindrical core magnetic body 102a, a cylindrical outer magnetic body 102b configured to constitute a magnetic path by surrounding the core magnetic body 102a, and a coil 102c wound around the core magnetic body 102a. Likewise, the electromagnet 104 includes a cylindrical core magnetic body 104a, a cylindrical outer magnetic body 104b configured to constitute a magnetic path by surrounding the core magnetic body 104a, and a coil 104c wound around the core magnetic body 104a. The coils 102c and 104c of the electromagnets 102 and 104 are connected to the control circuit 64 described previously, and a DC current regenerated from the motor 36 to the battery 38 flows through these coils.

Both of the pair of electromagnets 102 and 104 are arranged to be coaxial with each other, and are opposed to each other with a gap held between them. When the regenerative current flows through the coils 102c and 104c, the electromagnets 102 and 104 are excited in such a manner that the opposed sides of the core magnetic bodies 102a and 104a which are opposed to each other are of the same magnetic polarity.

The electromagnet 102 includes a pair of first support pins 106a protruding from both sides of the outer magnetic body 102b in directions perpendicular to the axis of the electromagnet, and a pair of second support pins 106b protruding from both sides of the outer magnetic body 102b in directions perpendicular to the axis of the electromagnet. Each of the first support pins 106a is provided at one end portion of the electromagnet 102 in the axial direction thereof; in this case, at one end portion thereof farther from the other electromagnet 104, and each of the second support pins 106b is provided at the other end portion of the electromagnet 102 in the axial direction thereof; in this case, at one end portion thereof opposed to the other electromagnet 104, and is positioned apart from the first support pin 106a in the axial direction of the electromagnet 102.

The electromagnet 104 includes a pair of first support pins 108a protruding from both sides of the outer magnetic body 104b in directions perpendicular to the axis of the electromagnet, and a pair of second support pins 108b protruding from both sides of the outer magnetic body 104b in directions perpendicular to the axis of the electromagnet. Each of the first support pins 108a is provided at one end part of the electromagnet 104 in the axial direction thereof; in this case, at one end part thereof farther from the other electromagnet 102, and each of the second support pins 108b is provided at the other end part of the electromagnet 104 in the axial direction thereof; in this case, at one end part thereof opposed to the other electromagnet 102, and is positioned apart from the first support pin 108a in the axial direction of the electromagnet 104.

The pairs of mounting plates 103a and 103b are arranged on both sides of the electromagnets 102 and 104, and are provided in parallel with the axes of the electromagnets 102 and 104. Elongate, thin linear support slits 110a and 110b are formed in the mounting plates 103a and 103b, and extend in parallel with the axes of the electromagnets 102 and 104.

Each of the first support pins 106a and the second support pins 106b protruding from the electromagnet 102 is inserted in each of the support slits 110a and 110b of a corresponding one of the mounting plates 103a and 103b opposed thereto, whereby the electromagnet 102 is supported by the mounting plates 103a and 103b to be slidable along the support slits 110a and 110b. Each of the first support pins 108a and the second support pins 108b protruding from the electromagnet 104 is inserted in each of the support slits 110a and 110b of a corresponding one of the mounting plates 103a and 103b opposed thereto, whereby the electromagnet 104 is supported by the mounting plates 103a and 103b to be slidable along the support slits 110a and 110b. As a result of this, both of the pair of electromagnets 102 and 104 are movable in a direction in which they approach each other and in a direction in which they are separated from each other.

Further, the pair of electromagnets 102 and 104 is supported by a pair of first support arms 112a and 112b, pair of second support arms 113a and 113b, and pair of central support plates 114. The elongate plate-shaped first support arms 112a and 112b are provided outside the mounting plates 103a and 103b. One end of each of the first support arms 112a and 112b is rotatably supported by a pivot 116, and a support slit 117 is formed in the other end of each of the first support arms 112a and 112b. The pivot 116 extends in a direction substantially perpendicular to the axes of the electromagnets 102 and 104, and is provided to be opposed to a part between the electromagnets 102 and 104, and a central part. The support pins 106a provided to protrude from the electromagnet 102 penetrate the support slits 110a and 110b of the mounting plates 103a and 103b, and are inserted in the support slits 117 of the first support arms 112a and 112b. Both of the pair of first support arms 112a and 112b are coupled to each other by a coupling rod 112c extending in parallel with the pivot 116.

The elongate plate-shaped second support arms 113a and 113b are provided outside the mounting plates 103a and 103b. One end of each of the second support arms 113a and 113b is rotatably supported by the pivot 116, and a support slit 118 is formed in the other end of each of the second support arms 113a and 113b. The support pins 108a provided to protrude from the electromagnet 104 penetrate the support slits 110a and 110b of the mounting plates 103a and 103b, and are inserted in the support slits 117 of the first support arms 112a and 112b. Both of the pair of second support arms 113a and 113b are coupled to each other by a coupling rod 113c extending in parallel with the pivot 116.

The elongate plate-shaped central support plates 114a and 114b are provided outside the mounting plates 103a and 103b substantially in parallel with the mounting plates. One end of each of the central support plates 114a and 114b is rotatably supported by the pivot 116, and the other end part of each of the plates 114a and 114b is adjacently opposed to each of the mounting plates 103a and 103b. A pair of guide slits 120a and 120b is formed in the other end part of each of the central support plates 114a and 114b. The guide slit 120a includes a first part extending in parallel with the support slit 110a, and a second part upwardly extending perpendicular to the first part. The guide slit 120b is formed symmetrical to the guide slit 120a, and includes a first part extending in parallel with the support slit 110a, and a second part upwardly extending perpendicular to the first part. The guide slits 120a and 120b are provided with a predetermined interval between them in the axial direction of the electromagnets 102 and 104. Further, the first parts of the guide slits 120a and 120b extend in directions in which they are separated from each other. In each of the guide slits 120a and 120b, a transition part between the first part and second part is formed into an arcuate shape.

The support pins 106b provided to protrude from the electromagnet 102 penetrate the support slits 110a and 110b of the mounting plates 103a and 103b, and are inserted in the guide slits 120a of the central support plates 114a and 114b. Further, the support pins 108b provided to protrude from the electromagnet 104 penetrate the support slits 110a and 110b of the mounting plates 103a and 103b, and are inserted in the guide slits 120b of the central support plates 114a and 114b.

In the manner described above, the pair of electromagnets 102 and 104 is supported by the first support arms 112a and 112b, the second support arms 113a and 113b, and the central support plates 114a and 114b. Further, the first and second support arms 112a, 112b, 113a, and 113b are rotated around the pivot 116, whereby both of the pair of electromagnets 102 and 104 are moved in the directions in which the electromagnets are made closer to each other or separated from each

### other.

The brake wire 50 of the bicycle is connected to, for example, the coupling rods 112c and 113c of the first and second support arms. One end of the outer tube 50b of the brake wire 50 is coupled to the coupling rod 112c of the first support arm, and the inner wire 50a is passed through the coupling rod 112c of the first support arm, and is coupled to the coupling rod 113c of the second support arm. By operating the rear brake lever 40A to pull the inner wire 50a of the brake wire 50, the first and second support arms 112a to 113b are rotated around the pivot 116. As a result of this, the mechanical brake, in this case, the rear brake 44 is operated.

In order to prevent the magnetic field from leaking from the electromagnet 102 or 103, a magnetic shield 124 is arranged to cover the electromagnets 102 and 104, and is attached to the mounting plates 103a and 103b.

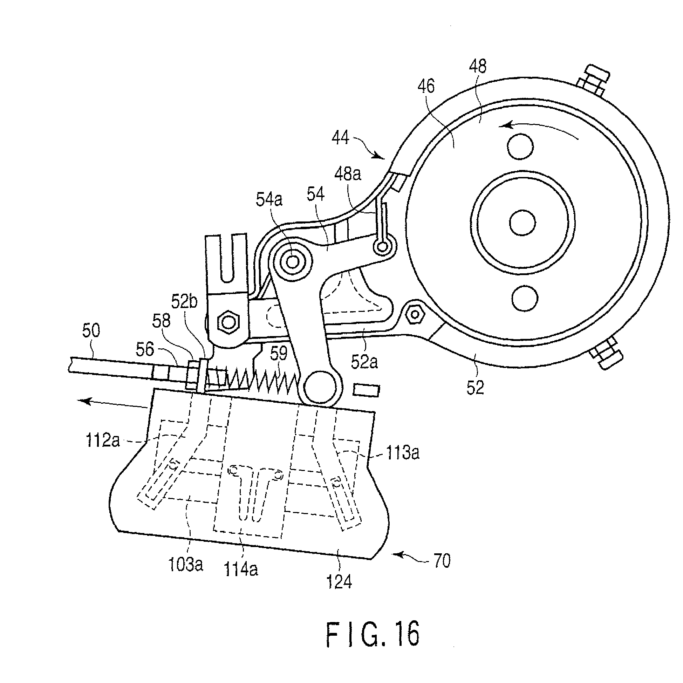

FIG. 16 shows an example in which the reaction force generator 70 configured as described above is attached to a drum-type brake 44, which is a rear-wheel braking mechanism. The brake 44 comprises a disk-like brake drum 46, and the brake drum 46 is provided in such a manner that the brake drum 46 is rotatable together with the rear wheel RW around the rear wheel RW axle F fixed to the body frame 10. A brake shoe 48 configured to brake the rotation of the brake drum 46, i.e., rotation of the rear wheel RW is provided inside the brake drum 46. The outside of the brake 44 is covered with a brake retention portion 52. Further, the brake retention portion 52 includes a forwardly extending arm member 52a, and the arm member 52a is fixed to a chain stay of the body frame 10.

A fixing part 52b is formed at a front end portion of the arm member 52a, and a rear end of the outer tube 50b is fixed to the fixing part 52b. The inner wire 50a of the rear brake wire 50 further extends rearward from the fixing part 52b, and is fixed to a coupling member 54. The coupling member 54 is supported rotatable around a pivot 54a, and one end thereof is coupled to an extension bar 48a configured to operate the brake shoe 48. As is generally known, the fixing part 52b comprises an adjusting screw 56 configured to adjust the length of the rear brake wire 50, and a locknut 58. A coil spring 59 is provided between the fixing part 52b and the coupling member 54, and urges the coupling member 54 and the rear brake in a direction in which the coupling member 54 and the rear brake lever 40A are returned to the initial value, i.e., in a direction in which the brake wire 50 is returned to the initial state.

When the inner wire 50a of the rear brake wire 50 is pulled by an operation of gripping the rear brake lever 40A toward the grip 16a side, the coupling member 54 is rotated to move the extension bar 48a, operate the brake shoe 48, and brake the rear wheel RW.

The first support arm 112a of the reaction force generator 70 is fixed to the fixing part 52b of the brake 44, and the second support arm 113a is coupled to the coupling member 54, and is made rotatable around the pivot 54a. The central support plates 114a and 114b are rotatably supported by the pivot 54a. As a result of this, the reaction force generator 70 is coupled to the brake 44, and when the rear brake is operated, the second support arm 113a is rotated together with the coupling member 54, and a reaction force generation operation is carried out.

Next, an operation of the regenerative braking device configured as described above will be described.

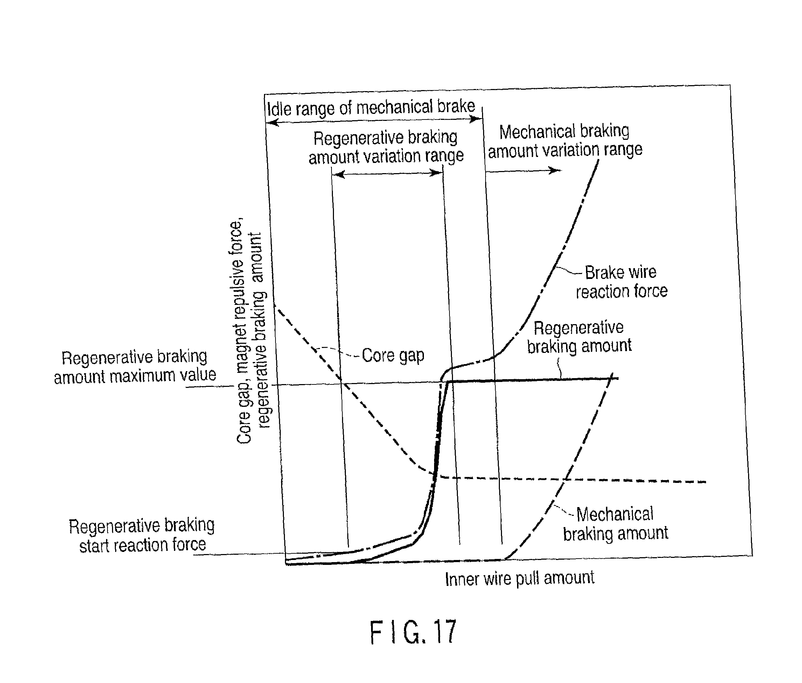

FIG. 17 is a view showing brake wire pull amount, i.e., brake lever operation amount versus variations in break wire reaction force (brake wire tension), distance (core gap) between the core magnetic bodies 102a and 104a of the pair of electromagnets 102 and 104, regenerative braking amount (braking amount), and mechanical braking amount (braking amount). Regarding the value of each item, the unit is made dimensionless for the sake of easy comprehension.

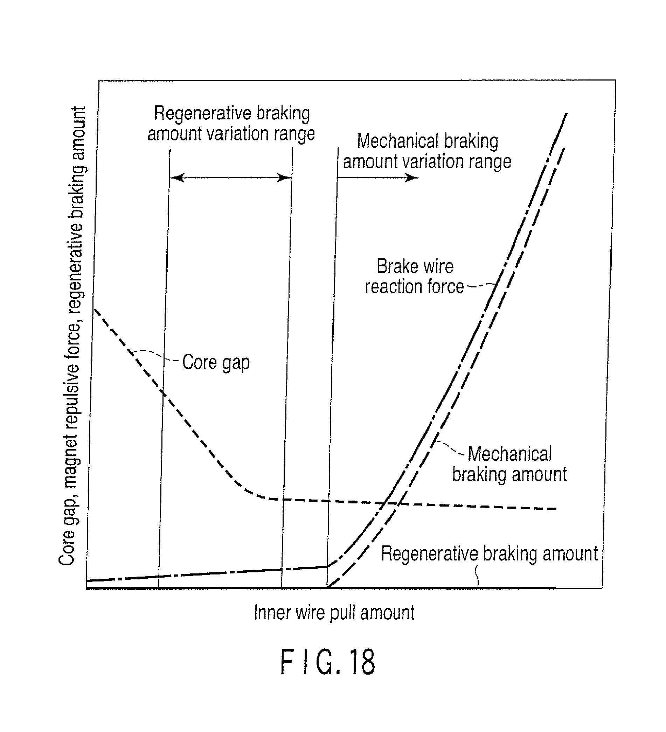

FIG. 18 shows a state where the rear brake lever 40A is not operated, and a small amount of brake wire reaction force is generated by the coil spring 59 attached to the rear brake 44. The coil spring 59 attached to the rear brake 44 is used to return the operated first and second support arms 112a, 112b, 113a, and 113b to their original positions at which the brake does not function.

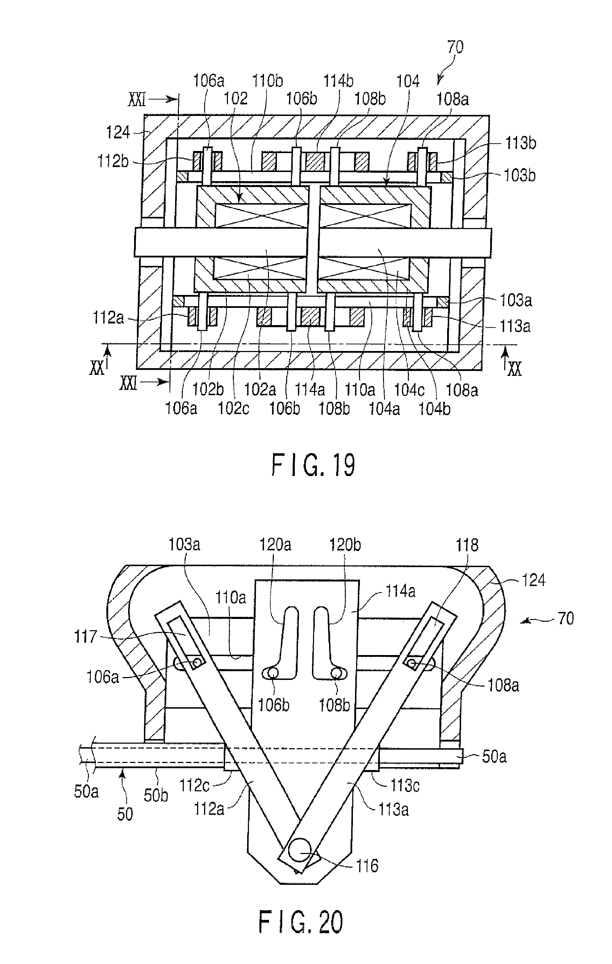

In the regenerative braking device 66, in the non-operative state, the reaction force generator 70 is in the state shown in FIGS. 13 to 15. When the rear brake lever 40A is operated, the inner wire 50a of the brake wire 50 is pulled toward the rear brake lever 40A side (left side in FIG. 7) by the rear brake lever 40A. Then, as shown in FIGS. 19, 20, and 21, the first support arms 112a and 112b, and the second support arms 113a and 113b of the reaction force generator 70 are pulled by the brake wire 50, and are rotated around the pivot 116 in a direction in which the arms 112a to 113b are made closer to each other, i.e., inwardly. By the rotation of the first support arms 112a and 112b, the support pins 106a of the electromagnet 102 are inwardly pressed by the first support arms 112a and 112b. At the same time, the support pins 108a of the electromagnet 104 are inwardly pressed by the second support arms 113a and 113b. As a result of this, the electromagnets 102 and 104 are moved in the direction in which the electromagnets 102 and 104 approach each other, and the gap between them is reduced.

On the other hand, when the brake wire 50 is pulled, the coil spring 59 is compressed, and a reaction force in the direction opposite to the operation direction of the brake lever 40A is caused to act on the brake wire 50. As a result of this, tension is generated in the brake wire 50. The tension is detected by a brake operation force sensor 68, and the detection signal is transmitted to the control circuit 64. When generation of regenerative braking start reaction force is detected by the brake operation force sensor 68, the control circuit 64 operates the motor 36 as a generator to start regeneration. At this time, the control circuit 64 controls the regeneration amount from the motor 36 in accordance with the tension (reaction force) of the brake wire 50 detected by the brake operation force sensor 68. That is, the larger the tension of the inner wire 50a, the more the regeneration amount is increased. A regenerative braking amount of the rear wheel RW obtained by the motor 36 varies in accordance with the regeneration amount, and hence it is possible to control the regenerative braking amount in accordance with the tension of the inner wire 50a.

The regenerative current generated from the motor by the regeneration and stored in the battery 38 flows through the coils 102c and 104c in the reaction force generator 70. At this time, the electromagnets 102 and 104 are excited in such a manner that the opposed sides of the core magnetic bodies 102a and 104a which are opposed to each other are of the same magnetic polarity. As a result of this, in the regenerative state, the electromagnetic force acts in such a manner that the electromagnets 102 and 104 repel each other. Accordingly, when the rear brake lever 40A is operated, and the electromagnets 102 and 104 are moved by the first support arms 112a and 112b, and the second support arms 113a and 113b in the direction in which the electromagnets 102 and 104 approach each other, the repulsive force between the electromagnets 102 and 104 is increased. The repulsive force is transmitted to the brake wire 50 through the support pins 106a and 108a, the support slits 110a and 110b, and the first and second support arms 112a, 112b, 113a, and 113b, and hence the repulsive force of the electromagnets 102 and 104 is superposed on the brake wire reaction force.

As a result of this, the tension of the inner wire 50a is increased, and the reaction force acting on the rear brake lever 40A is increased. When it is felt that excessive regenerative braking is generated from the reaction force or the like from the rear brake lever 40A, if the operator grips the rear brake lever 40A with less force, the tension of the brake wire 50 becomes smaller, and the regenerative braking force can also be made smaller. As a result of this, it is possible to appropriately control the regenerative braking amount. The tension of the inner wire 50a is transmitted to the rear brake lever 40A as a reaction force. Accordingly, it is possible for the operator of the rear brake lever 40A to grasp the magnitude of the regenerative braking force by the reaction force felt by gripping the rear brake lever 40A.

It should be noted that even in the case where the drive current flows through the coils 102c and 104c of the electromagnets 102 and 104, the poles of the electromagnets of the same magnetic polarity are opposed to each other, and hence a repulsive force is generated. As a result of this, the mechanical brake is not unnecessarily operated by the reaction force generator 70.

As described above, the pair of electromagnets 102 and 104 constitutes a reaction force application section configured to generate a brake operation reaction force by the regenerative current from the motor 36, and apply the generated brake operation reaction force to the brake wire 50.

When the operation amount of the rear brake lever 40A is increased, the inner wire 50a is pulled, and the first and second support arms 112a, 112b, 113a, and 113b are further rotated toward the central support plates 114a, 114b side. As a result of this, the support pins 106a, 106b, 108a, and 108b of the electromagnets 102 and 104 are moved within the support slits 110a and 110b, and along the guide slits 120a and 120b provided in the central support plates 114a and 114b, and the electromagnets 102 and 104 are further moved in the direction in which the electromagnets 102 and 104 approach each other. Accordingly, the gap between the core magnetic bodies 102a and 104a becomes smaller, and the repulsive force of the electromagnetic force becomes larger. As described above, as shown in FIG. 17, when the operation amount of the rear brake lever 40A is increased within the idle range of the rear brake 44, the brake wire reaction force also becomes larger, and hence the regenerative braking amount can be increased.

When the operation amount of the rear brake lever 40A is further increased, and the regenerative braking amount reaches the regenerative braking amount maximum value determined by the rating of the motor 36 or rating of the inverter circuit for motor drive provided in the control circuit 64, even if the brake wire reaction force is increased thereafter, the regenerative braking amount is controlled to the regenerative braking amount maximum value.

FIGS. 19 to 21 show the state where the reaction force generator 70 is operated to a degree corresponding to about the regenerative braking amount maximum value. The side edge portion of each of the guide slits 120a and 120b, along which each of the support pins 106b and 108b of the electromagnets 102 and 104 moves from the non-operative state shown in FIGS. 13 to 15 to the state shown in FIGS. 19 to 21, has a shape near to a circular arc formed around the axis used as a center thereof. As a result of this, the gap between the core magnetic bodies of the electromagnets 102 and 104 changes largely with respect to the variation in the pull amount of the inner wire 50a as shown in FIG. 17. Thus, the brake wire reaction force (repulsive force of the electromagnets) largely changes with respect to the operation of the rear brake lever 40A, and hence it is possible to largely change the regenerative braking amount.

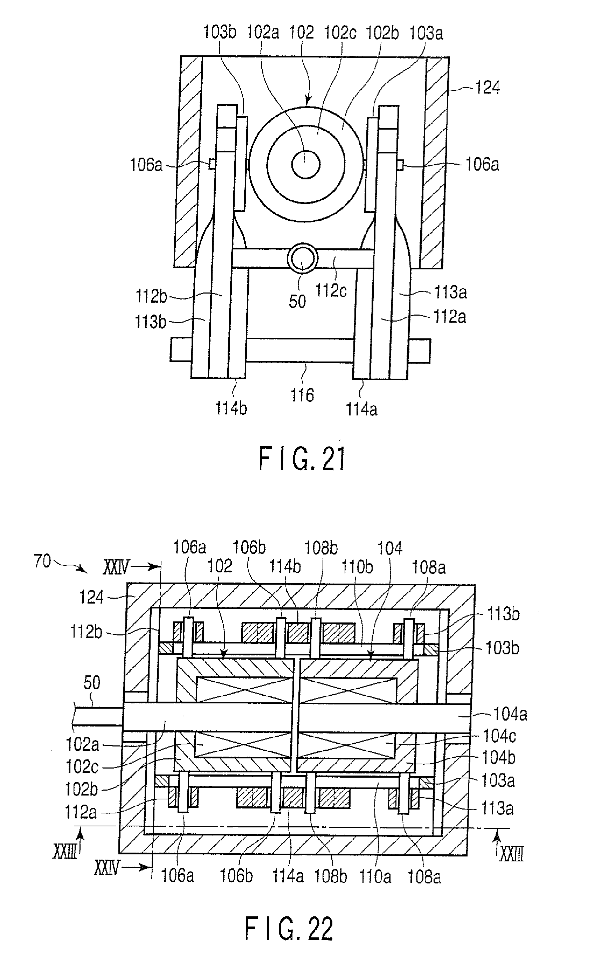

When the rear brake lever 40A is further operated from the position shown in FIGS. 19 to 21, as shown in FIGS. 21, 22, and 23, the first and second support arms 112a, 112b, 113a, and 113b are rotated toward the central support plates 114a, 114b side. At this time, the guide slits 120a and 120b are not provided in the directions in which the electromagnets 102 and 104 further approach each other from the positions of the support pins 106b and 108b. Thus, the support pins 106a and 108a inserted in the support slits 117 and 118 provided in the first and second support arms 112a, 112b, 113a, and 113b intend to move along the support slits 117 and 118 in the directions in which the support pins 106a and 108a are separated from the distal end side of each support arm, i.e., from the pivot 116. The guide slits 120a and 120b formed in the central support plates 114a and 114b also extend in the directions in which the slits are separated from the pivot 116. As a result of this, the support pins 106b and 108b of the electromagnets 102 and 104 inserted in the guide slits 120a and 120b also move in the directions in which the support pins 106a and 108b are separated from the pivot 116 along the guide slits 120a and 120b. As a result, the pair of electromagnets 102 and 104 move in the outer-circumferential direction, i.e., in the direction in which the electromagnets 102 and 104 are separated from the pivot 116 together with the mounting plates 103a and 103b.

At this time, the gap between the core magnetic bodies of the pair of electromagnets 102 and 104 is limited in such a manner that the gap does not become smaller than the interval between the guide slits 120a and 120b. As a result of this, as shown in FIG. 17, the gap between the core magnetic bodies hardly changes, and in this operation region, the brake wire reaction force hardly increases even when the operation amount of the rear brake lever 40A is increased.

When the rear brake lever 40A is further operated, the idle part of the rear brake 44 is exhausted, and the mechanical brake functions. The mechanical braking amount is varied by the force pressing the brake pad or the like, and hence the pressing force (brake wire tension) is superposed as the brake wire reaction force.

In this embodiment, with a decrease in the distance between the electromagnets 102 and 104, the repulsive force becomes larger and, in the state shown in FIGS. 19 to 21, the distance between the core magnetic bodies is sufficiently small, and hence the generated electromagnetic force is large. Thus, even when the electromagnets 102 and 104 are designed to be small in size, it becomes possible to obtain a sufficient regenerative braking amount.

In this embodiment, FIG. 18 shows variations in inner-wire pull amount versus variations in the gap between the core magnetic bodies, brake wire reaction force, and mechanical braking amount (braking amount) in the case where the battery 38 is in a fully charged state, and regenerative braking cannot function. In this case, no brake wire reaction force is generated by the regenerative braking, and hence it can be seen that the mechanical brake can be smoothly operated.

Further, FIGS. 22, 23, 24 show the state of the reaction force generator 70 at the time at which the mechanical brake is operated to the utmost. From these drawings, it can be seen that even when the first and second support arms 112a, 112b, 113a, and 113b are rotated so that the mechanical brake can function to its maximum, the core magnetic bodies 102a and 104a of the electromagnets 102 and 104 do not come into contact with each other, and do not obstruct the rotation of the first and second support arms.

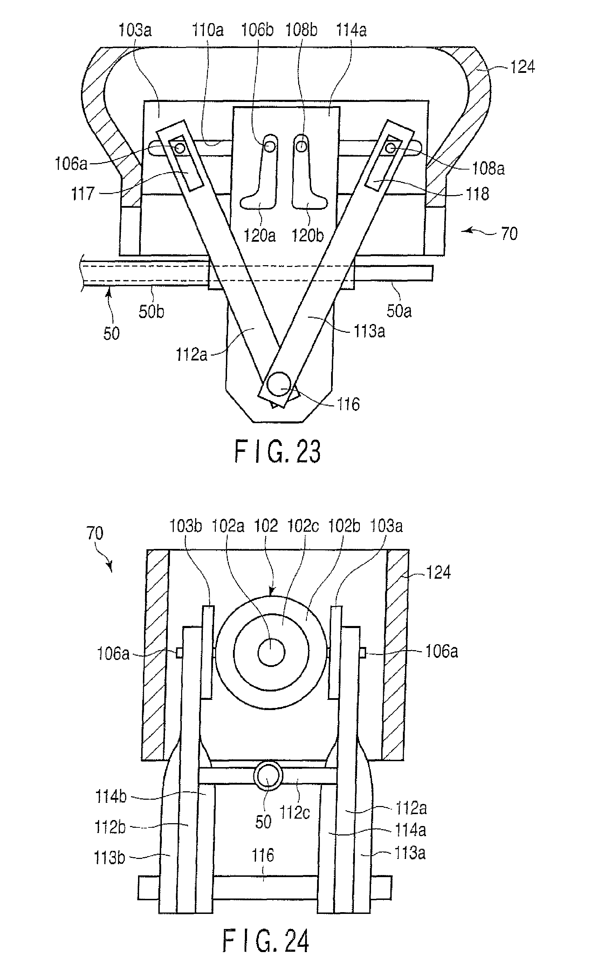

The side edge (shown as an inclined side edge in FIGS. 20 and 23) of each of the guide slits 120a and 120b on the support arm side, along which each of the support pins 106b and 108b moves from the state of FIG. 20 to the state of FIG. 23, is formed in such a manner that the closer the side edge to the inside (pivot side) with respect to the radial direction from the pivot 116, the smaller the distance between the side edge and first or second support arm becomes. Accordingly, in the state where the regenerative brake is operated, the support pin 106b or 108b is pressed toward the first or second support arm side by the repulsive force of the electromagnets 102 and 104, and the force is converted by the inclined side edges of the guide slits 120a and 120b into a force that moves the electromagnets 102 and 104 toward the pivot 116 side. This force becomes a force that moves the support pins 106a and 108a toward the pivot 116 side within the support slits 117 and 118 of the first and the second support arms 112a, 112b, 113a, and 113b and, as a result of this, this force moves out the first and second support arms with respect to the central support plates 114a and 114b. Accordingly, the force transmitted to the first and second support arms 112a, 112b, 113a, and 113b is superposed on the reaction force of the brake wire 50.

Conversely, when the guide slits 120a and 120b are parallel with the pivot 116, the force described above is not converted by the guide slits into a force that moves the support pins 106b and 108b toward the inside, and hence it is difficult to smoothly convert the repulsive force of the electromagnets into the brake wire reaction force.

As described above, according to the fourth embodiment, it is possible to obtain a regenerative braking system provided with the characteristics shown in FIG. 17, and use the regenerative brake and mechanical brake in combination with each other for the operation without deteriorating the sense of operation of the brake.

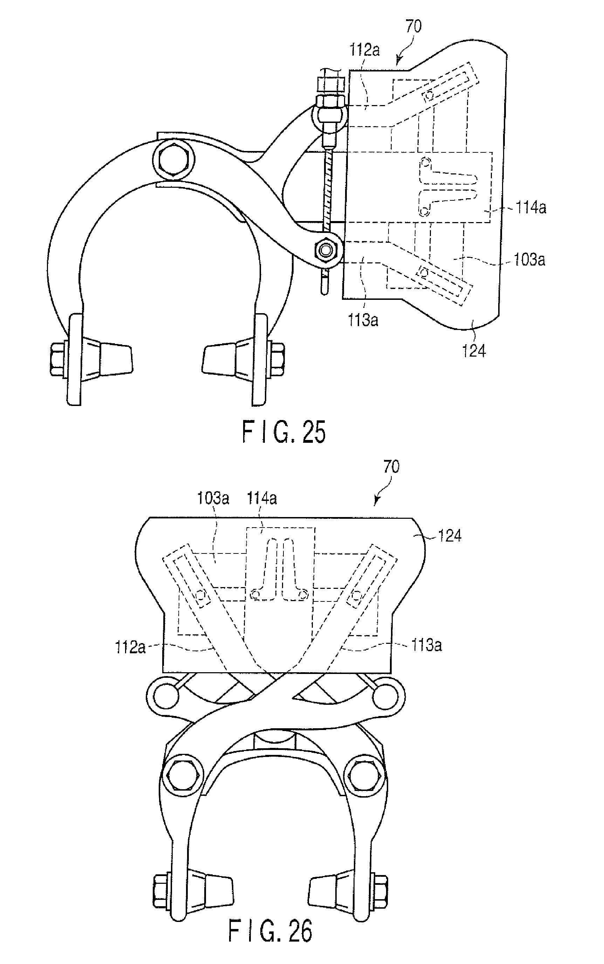

In the fourth embodiment, the configuration in which the reaction force generator 70 is incorporated in the rear brake 44 of the electric power assisted bicycle is employed. However, the configuration is not limited to this. The reaction force generator 70 may be combined with a caliper brake (side-pull type) as shown in FIG. 25, or may be combined with a caliper brake (center-pull type) as shown in FIG. 26. Although the caliper brake (center-pull type) includes two pivots, in this case, it is sufficient if the central support plates 114a and 114b are fixed to the two pivots. As a result of this, the rotational operations of the support arms and central support plates become identical with those in the case where one pivot is used. As is evident from the function of the fourth embodiment described above, the function of the reaction force generator is produced by the rotation-positional relationship between the central support plates 114a and 114b, and the support arms, and hence even when the two pivots are used, the same function as the fourth embodiment is obtained. In this case, the first and second support arms 112a, 112b, 113a, and 113b are coupled to the brake arm or are formed integral with the brake arm as an extension part of the brake arm.

### (Fifth embodiment)

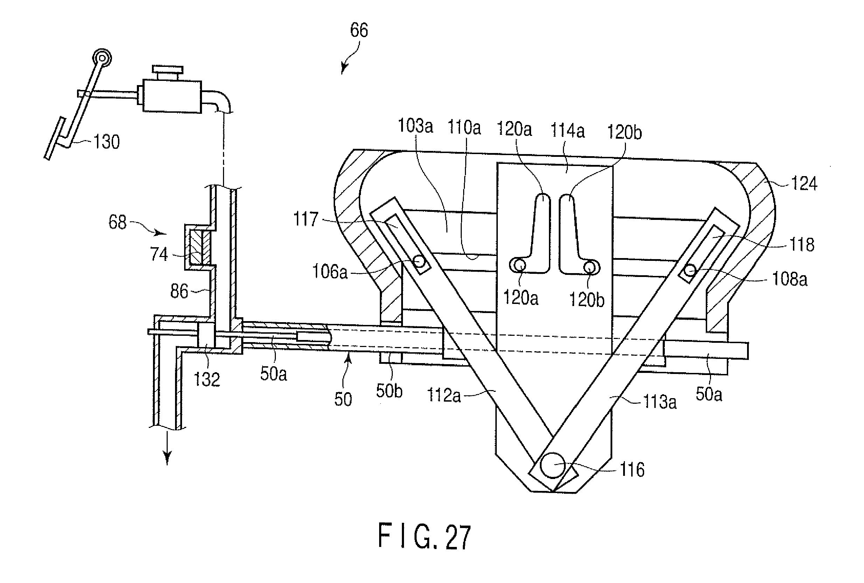

Then, a regenerative braking device according to a fifth embodiment of the present invention will be described below. FIG. 27 is a cross-sectional view showing the regenerative braking device according to the fifth embodiment. It should be noted that in the fifth embodiment, the same parts as those of the fourth embodiment are denoted by the same reference symbols as those of the fourth embodiment, and a detailed description of them are omitted.

According to this embodiment, the regenerative braking device 66 is applied to an electric-powered vehicle in which an operation amount of a brake pedal 130 is transmitted to a braking mechanism by means of hydraulic pressure. The regenerative braking device 66 comprises a brake operation force sensor 68, and a reaction force generator 70. The brake operation force sensor 68 includes a pressure sensor 74 arranged directly inside the brake piping 86, and the pressure sensor 74 detects the pressure of a working fluid in the brake piping 86.

The reaction force generator 70 is provided with, as in the fourth embodiment, a pair of electromagnets, first and second support arms 112a, 112b, 113a, and 113b, and mounting plates 103a and 103b, central support plates 114a and 114b, and the first and second support arms and central support plates are rotatably supported by a pivot 116. Each of the electromagnets includes a coil, and the coils are connected to a control circuit, and a DC current regenerated from a motor to a battery flows through the coils.

A brake wire 50 is coupled to the first and second support arms 112a and 113a. An inner wire 50a of the brake wire 50 penetrates a part of the brake piping 86. A piston 132 is fixed to an end part of the inner wire 50a, and the piston 132 is slidably arranged inside the brake piping 86. The piston 132 moves within the brake piping 86 in accordance with the pressure, and the inner wire 50a is moved together with the piston as one body integral with each other. The piston 132 and the inner wire 50a constitute a pressure transmission mechanism configured to transmit the hydraulic pressure inside the brake piping 86, i.e., the operation amount of the brake pedal 130 to the reaction force generator 70.

According to the regenerative braking device 66 configured as described above, the operation amount of the working fluid inside the brake piping, and the brake operation force are transmitted to the reaction force generator 70, and the reaction force generator generates a reaction force corresponding to the brake operation force, and transmits the generated reaction force to the brake pedal. As a result of this, it is possible to obtain the same function/advantage as the fourth embodiment described previously.

The present invention is not limited to the embodiments described previously and, in the implementation stage, the constituent elements may be modified and embodied within the scope not deviating from the gist of the invention. Further, by appropriately combining a plurality of constituent elements disclosed in the above embodiments, various inventions can be formed. For example, some constituent elements may be omitted from all the constituent elements shown in the embodiments. Furthermore, constituent elements of different embodiments may be appropriately combined.

Although the regenerative braking devices according to the first and fourth embodiments are considered to be mainly applied to a bicycle, and the regenerative braking devices according the second and fifth embodiments are considered to be mainly applied to a motorcycle and electric vehicle, any one of the embodiments may be applied to any one of a bicycle, motorcycle, and electric vehicle, and may be further applied to other vehicle drive systems each including an electrically-driven wheel, and electric-motor vehicles. Further, in the first and second embodiments, although the brake operation has been described with reference to a brake lever, the configuration in which a brake pedal is used may also be employed.

The brake operation force sensor is not limited to the above-mentioned embodiments, and may be configured otherwise provided the sensor can detect the tension of the brake wire or brake hydraulic pressure. Further, it is sufficient for the reaction force generator if the unit is configured to apply a tension to the brake wire, or is configured to apply a pressure to the working fluid in accordance with the regeneration amount and movement of the brake wire (or working fluid), and further, the configuration thereof is not limited to the above-mentioned embodiments, and may be variously modified within the scope of the present invention.

## Claims

1. A regenerative braking device **characterized by** comprising:
a braking mechanism (42, 44) configured to apply a braking force to a wheel;
a brake operation section (40A, 40B) configured to generate a brake operation amount;
a brake operation amount transmission section (50) configured to transmit the brake operation amount from the brake operation section to the braking mechanism;
a brake operation force sensor (68) configured to detect a brake operation force of the brake operation amount transmission section;
a drive device (36) configured to apply a drive force to the wheel, and apply, at an operation time of the brake operation section, a regenerative braking force according to the brake operation force detected by the brake operation force sensor to the wheel;
an electric power storage device (38) configured to storage a regenerative electric power from the drive device; and
a reaction force generator (70) configured to apply a brake operation reaction force in accordance with a regeneration amount from the drive device to the brake operation amount transmission section.

2. The regenerative braking device according to claim 1, **characterized in that** the brake operation amount transmission section (50) comprises a brake wire extending from the brake operation section (40A, 40B) to the braking mechanism (42, 44), and the brake operation force is a tension of the brake wire.

3. The regenerative braking device according to claim 1, **characterized in that** the brake operation amount transmission section comprises a brake piping (86) extending from the brake operation section (40A, 40B) to the braking mechanism, and a working fluid filled into the brake piping, and the brake operation force is pressure of the working fluid in the brake piping.

4. The regenerative braking device according to any one of claims 1 to 3, **characterized in that** the reaction force generator (70) comprises a reaction force application section configured to generate the brake operation reaction force by using the regenerative electric power from the drive device, and apply the generated brake operation reaction force to the brake operation amount transmission section (50).

5. The regenerative braking system according to any one of claims 1 to 4, **characterized in that** the drive device comprises a motor (36) configured to apply an assist force to the wheel.

6. The regenerative braking device according to claim 1, **characterized in that** the reaction force generator (70) is configured to apply a brake operation reaction force corresponding to the regeneration amount from the drive device and the brake operation amount to the brake operation amount transmission section.

7. The regenerative braking device according to claim 6, **characterized in that** the brake operation amount transmission section comprises a brake wire (50) including an inner wire (50a) configured to connect the brake operation section (40A, 40B) and the braking mechanism (42, 44) to each other, and an outer tube (50b) configured to cover the inner wire, and the brake operation force sensor comprises a pressure sensor (74) configured to detect a pressure generated in the outer tube as the reaction force of the tension of the inner wire, as the brake operation force.

8. The regenerative braking device according to claim 7, **characterized in that** the reaction force generator (70) comprises a reaction force application section configured to generate the brake operation reaction force in accordance with an electromagnetic force generated at a magnet (94) by a regenerative current from the drive device and the magnet fixed to the inner wire.

9. The regenerative braking system according to claim 8, **characterized in that** the reaction force generator (70) is configured in such a manner that when the brake operation section (40A, 40B) is not operated, a current by which the drive device drives the wheel and the electromagnetic force generated at the magnet (94) are in the same direction as the direction of the brake operation reaction force at the regeneration time.

10. The regenerative braking system according to claim 8 or 9, **characterized in that** the reaction force generator (70) comprises a magnetic body (80) provided around the magnet and configured to constitute a return magnetic path of a magnetic flux from the magnet.

11. A vehicle **characterized by** comprising:
a motor (36) configured to drive a wheel;
a braking mechanism (42, 44) configured to apply a braking force to the wheel;
a brake operation section (40A, 40B) configured to generate a brake operation amount;
a brake operation amount transmission section (50, 86) configured to transmit a brake operation amount from the brake operation section to the braking mechanism;
a brake operation force sensor (68) configured to detect a brake operation force of the brake operation amount transmission section;
a drive device configured to apply, upon operating the brake operation section, a regenerative braking force according to the brake operation force detected by the brake operation force sensor to the wheel;
an electric power storage device (38) configured to receive a regenerative electric power from the drive device; and
a reaction force generator (70) configured to apply a brake operation reaction force corresponding to the regeneration amount from the drive device to the brake operation amount transmission section.

12. A vehicle **characterized by** comprising:
a motor (36) configured to drive a wheel;
a braking mechanism (42, 44) configured to apply a braking force to the wheel;
a brake operation section (40A, 40B) configured to generate a brake operation amount;
a brake operation amount transmission section (50, 86) configured to transmit the brake operation amount from the brake operation section to the braking mechanism;
a brake operation force sensor (68) configured to detect a brake operation force of the brake operation amount transmission section;
a drive device configured to apply a regenerative braking force according to the brake operation force detected by the brake operation force sensor to the wheel;
an electric power storage device (38) configured to receive a regenerative electric power from the drive device; and
a reaction force generator (70) configured to generate a brake operation reaction force according to the regeneration amount from the drive device and the brake operation amount by a repulsive force of a pair of electromagnets (102, 104), and apply the generated brake operation reaction force to the brake operation amount transmission section.

13. The vehicle according to claim 12, **characterized in that** each of the pair of electromagnets (102, 104) comprises a core (102a, 104a), and a coil (102c, 104c) wound around the core and configured to be supplied with the regenerative electric power, the electromagnets are arranged coaxial with each other and opposed to each other with a gap held between the electromagnets,
the electromagnets are excited in such a manner that opposed sides of the cores which are opposed to each other are of the same magnetic polarity, when the regenerative electric power flows through the coils, and
the reaction force generator (70) comprises mounting members (103a, 103b) configured to support the pair of electromagnets to be movable in directions in which both the electromagnets are made closer to each other, and are separated from each other, and first and second support arms (112a, 112b, 113a, 113b) connected to the electromagnets and the brake operation amount transmission section (50), and configured to move the pair of electromagnets in a direction in which both the electromagnets are made closer to each other in accordance with the brake operation amount.

14. The vehicle according to claim 13, **characterized in that** each of the pair of electromagnets (102, 104) comprises first and second support pins (106a, 106b, 108a, 108b), each of the mounting members (103a, 103b)comprises a support slit (l10a, 110b) in which the first and second support pins of the pair of electromagnets are inserted, and
the first support arm (112a, 112b) comprises a support slit (117) in which the first support pin of one of the electromagnets is inserted, the second support arm (113a, 113b) comprises a support slit (118) in which the first support pin of the other of the electromagnets is inserted, and the first and second support arms are rotatably supported by a common pivot.

15. The vehicle according to claim 14, **characterized in that** the reaction force generator (70) comprises a central support member (114a, 114b) configured to support the second support pins (106b, 108b) of the pair of electromagnets (102, 104), and maintain, when the pair of electromagnets approach each other with a predetermined gap held between the electromagnets, the electromagnets in the state where the predetermined gap is held between the electromagnets,
the central support member comprises a pair of guide slits (120a, 120b) in which the second pins of the electromagnets are inserted, each of the guide slits comprises a first part extending in parallel with the support slit of the mounting member, and a second part extending substantially perpendicular to the first part, the pair of guide slits is provided in the axial direction of the electromagnets with the predetermined gap held between the guide slits, and
the first parts of the pair of guide slits extend in directions in which the first parts are separated from each other and, in each of the guide slits, a transition part between the first part and the second part is formed into an arcuate shape.
